# EUROPEAN PATENT APPLICATION

(11) **EP 3 493 019 A1**
(43) Date of publication of application: **05.06.2019**
(21) Application number: 16910024.5
(22) Date of filing: 27.07.2016
(51) Int. Cl.: G06F 1/16

(54) **DISPLAY POSITION ADJUSTING METHOD AND SMART BRACELET**

(71) Applicant: Shenzhen Royole Technologies Co., Ltd., Shenzhen, Guangdong 518052 (CN)
(72) Inventor: FU, Yang, Shenzhen Guangdong 518052 (CN)
(74) Representative: Hamer, Christopher K.
(86) International application number: PCT/CN2016/091839
(87) International publication number: WO 2018/018443

(57) **Abstract**

A method for adjusting a display position and a smart bracelet are provided. The smart bracelet has an interior surface on which a plurality of pressure sensors is disposed. The smart bracelet has a chamber receiving a movable body. The movable body moves along the interior surface of the smart bracelet. The smart bracelet has an exterior surface which includes a display area. The method includes: receiving a plurality of pressure values detected by the plurality of pressure sensors; determining a position of a pressure sensor corresponding to the greatest of the plurality of pressure values is a lowest position on the smart bracelet; and determining a display section of the exterior surface of the smart bracelet according to the lowest position. The display position on the smart bracelet can be intelligently adjusted according to the orientation of the smart bracelet, thereby facilitating the user's viewing and improving user experience.

## Description

### TECHNICAL FIELD

The present disclosure relates to the electronic field, and specifically, to a method for adjusting a display position and a smart bracelet.

### BACKGROUND

With the development of smart products, applications of wearable devices are more and more popular. Smart bracelets, as a mainstream form of the wearable devices, are used by more and more people.

A smart bracelet can record real-time data, such as exercise, diet in a common life, and can synchronously display data in a smart terminal, such as a smart phone synchronously communicating with the smart bracelet. Accordingly, the smart bracelet is provided with a display area. At present, since the display area of the smart bracelet is relatively large, for example, occupies 70%, even the entirety, of the overall circumference of the smart bracelet, however, only a part of the display area can be viewed by a user wearing it. If the bracelet is loose, the display position on the bracelet varies as the arm of the user swings, such that what is displayed in a specified position on the bracelet can be viewed only with the assistance of another hand of the user, which reduces utilization rate of the entire display area and is inconvenient for the user.

### SUMMARY

A method for adjusting a display position and a smart bracelet are provided by implementations of the present disclosure, so as to adjust the display section of the smart bracelet according to the position of the smart bracelet worn on the user.

According to one aspect of the present disclosure, a method for adjusting a display position, applicable to a smart bracelet, is provided. The smart bracelet has an interior surface on which a plurality of pressure sensors is disposed. The smart bracelet has a chamber receiving a movable body. The movable body moves along the interior surface of the smart bracelet. The smart bracelet has an exterior surface which includes a display area. The method includes:
receiving a plurality of pressure values detected by the plurality of pressure sensors;
determining a position of a pressure sensor corresponding to the greatest of the plurality of pressure values is a lowest position on the smart bracelet; and
determining a display section of the exterior surface of the smart bracelet according to the lowest position.

According to another aspect of the present disclosure, a smart bracelet is provided. The smart bracelet has an interior surface on which a plurality of pressure sensors is disposed. The smart bracelet has a chamber receiving a movable body. The movable body moves along the interior surface of the smart bracelet. The smart bracelet has an exterior surface which includes a display area. The smart bracelet includes:
a receiving unit configured to receive a plurality of pressure values detected by the plurality of pressure sensors; and
a determining unit configured to determine a position of a pressure sensor corresponding to the greatest of the plurality of pressure values is a lowest position on the smart bracelet,
wherein the determining unit is further configured to determine a display section of the exterior surface of the smart bracelet according to the lowest position.

As seen from the above, according to the present disclosure, the plurality of pressure sensors is disposed on the interior surface of the smart bracelet, and the chamber of the smart bracelet receives the movable body, so as to receive the pressure values due to the movable body detected by the plurality of pressure sensors, determine the position of the pressure sensor corresponding to the greatest of the plurality of pressure values is the lowest position on the smart bracelet, and finally determine the display section of the exterior surface of the smart bracelet according to the lowest position. Hence, the display position on the smart bracelet can be intelligently adjusted according to the orientation of the smart bracelet, thereby facilitating the user's viewing and improving user experience.

### BRIEF DESCRIPTION OF THE DRAWINGS

In order to more clearly describe technical solutions according to implementations of the present disclosure or prior art, accompanying drawings used for describing the implementations or the prior art will be briefly introduced hereinafter. Apparently, the accompanying drawings described hereinafter merely show some implementations of the present disclosure, and persons skilled in the art may also derive other drawings from these accompanying drawings without creative efforts.
Fig. 1a is a schematic view of a smart bracelet according to an implementation of the present disclosure.
Fig. 1b is a schematic flowchart of a first implementation of a method for adjusting a display position according to the present disclosure.
Fig. 1c is a schematic view of coordinates on the smart bracelet according to an implementation of the present disclosure.
Fig. 2 is a schematic flowchart of a second implementation of a method for adjusting a display position according to the present disclosure.
Fig. 3 is a schematic structural view of a first implementation of a smart bracelet according to the present disclosure.
Fig. 4 is a schematic structural view of a second implementation of a smart bracelet according to the present disclosure.
Fig. 5 is a schematic structural view of a third implementation of a smart bracelet according to the present disclosure.

### DETAILED DESCRIPTION

A method for adjusting a display position and a smart bracelet are provided by implementations of the present disclosure, so as to adjust the display section of the smart bracelet according to the position of the smart bracelet worn on the user.

Purposes, technical solutions, and advantages of the implementations of the present disclosure will become more apparent from a clear, complete description for technical solutions according to the implementations of the present disclosure in conjunction with the drawings in the implementations of the present disclosure hereinafter. Apparently, the implementations to be described below are merely a part, rather than all of implementations of the present disclosure. Other implementations obtained by persons skilled in the art from the implementations given herein without creative efforts should all fall within the protection scope of the present disclosure.

Unless specified otherwise, all technical or scientific terms used herein have common meanings as understood by persons skilled in the art to which the present disclosure belongs. The terms "first", "second", "third", "fourth", and the like used herein are used to distinguish different elements, rather than indicate a specified order, number, and importance. Similarly, the term "a", "an", "the", or the like does not indicate a quantitative limit, but rather is used to indicate at least one. The term "comprise", "include", or the like is intended to indicate that an element or component appearing before the term encompass elements or components listed after the term as well as equivalents thereof, but does not exclude other elements or components. The term "connect", "couple", or the like is not limited to a physical or mechanical connection, but rather may include an electrical connection, whether direct or indirect. "Upper", "lower", "left", "right", and the like are merely used to indicate relative positional relationships, and when absolute positions of described objects vary, the relative positional relationships may vary correspondingly.

Reference to "an implementation" herein means that a particular feature, structure, or characteristic described in connection with the implementation may be included in at least one implementation of the present disclosure. The appearance of this phrase in various places in the specification does not necessarily refer to the same implementations, or independent or alternative implementations excluding other implementations. It should be explicitly or implicitly understood by persons skilled in the art that the implementations described herein may be combined with other implementations.

A method for adjusting a display position according to an implementation of the present disclosure is applicable to a smart bracelet. The smart bracelet has an interior surface on which a plurality of pressure sensors is disposed. The smart bracelet has a chamber receiving a movable body. The movable body moves along the interior surface of the smart bracelet. The smart bracelet has an exterior surface which includes a display area. The method includes:
receiving a plurality of pressure values detected by the plurality of pressure sensors;
determining a position of a pressure sensor corresponding to the greatest of the plurality of pressure values is a lowest position on the smart bracelet; and
determining a display section of the exterior surface of the smart bracelet according to the lowest position.

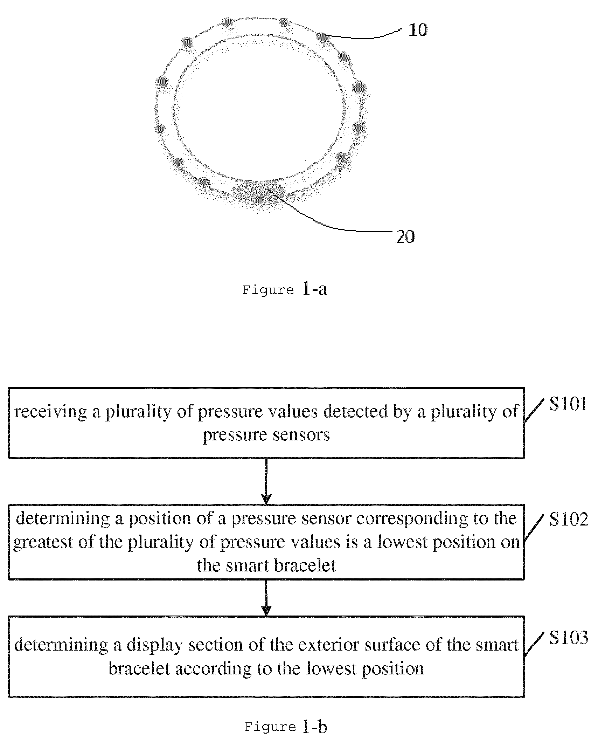

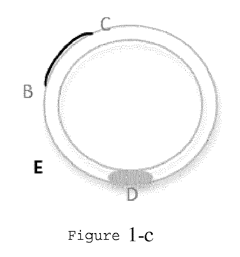

The implementations of the present disclosure are described in conjunction with the drawings hereinafter. Fig. 1a is a schematic view of a smart bracelet according to an implementation of the present disclosure. As illustrated in Fig. 1a, a plurality of pressure sensors 10 are disposed on the interior surface of the smart bracelet. The chamber of the smart bracelet receives a movable body 20. The movable body 20 moves along the interior surface of the smart bracelet. The exterior surface of the smart bracelet includes the display area.

In an implementation of the present disclosure, the movable body presses the pressure sensors disposed on the interior surface of the smart bracelet when moving along the annular chamber, such that the pressure sensors detect pressure values. It may be understood that, the pressure values detected by the pressure sensors disposed in different positions of the interior surface are different, and the pressure value detected in the lowest position on the smart bracelet is the greatest.

In an implementation of the present disclosure, the number of the pressure sensors is at least two.

Preferably, the plurality of pressure sensors is disposed at even intervals on the interior surface of the smart bracelet.

Preferably, in an implementation of the present disclosure, the smart bracelet may be a smart bracelet in the shape of an annular pipe, and some pressure sensors may be evenly disposed along the interior surface of the annular pipe. The annular pipe receives the movable body, for example, flowing liquid having a certain weight. When the position of the smart bracelet in the shape of the annular pipe varies, the movable liquid may also flow correspondingly, such that the liquid may press the pressure sensors due to a gravity acting on the liquid. It may be understood that the pressure value detected by the pressure sensor in the lowest position on the smart bracelet in the shape of the annular pipe is the greatest.

Optionally, in another implementation of the present disclosure, the smart bracelet may also be a semi-enclosed shape. A plurality of pressure sensors may be disposed on the interior surface of the smart bracelet of the semi-enclosed shape, and some movable solids are placed in the smart bracelet. The solids are accommodated in the smart bracelet of the semi-enclosed shape, such that when the position of the smart bracelet varies, the solids move along the smart bracelet of the semi-enclosed shape, and press the pressure sensors. It may be understood that the pressure value detected by the pressure sensor in the lowest position on the smart bracelet of the semi-enclosed shape is the greatest.

Optionally, the entire exterior surface of the smart bracelet may be configured to be a displayable area, or a part of the exterior surface may be configured to be a displayable area.

Preferably, 1/3 of the entire circumference of the smart bracelet may be the display area, so as to be more consistent with a viewing habit of the user, since an area of the smart bracelet viewable by the user sometime is only 1/3 of the entire area.

Fig. 1b is a schematic flowchart of a first implementation of a method for adjusting a display position according to the present disclosure. The method for adjusting a display position is based on the smart bracelet as illustrated in Fig. 1a. As illustrated in Fig. 1b, the method for adjusting a display position may include steps S101-S103.

Step S101 is receiving a plurality of pressure values detected by a plurality of pressure sensors.

In an implementation of the present disclosure, the smart bracelet as illustrated in Fig. 1a receives the plurality of pressure values detected by the plurality of pressure sensors disposed on the interior surface of the smart bracelet.

Step S102 is determining a position of a pressure sensor corresponding to the greatest of the plurality of pressure values is a lowest position on the smart bracelet.

The lowest position means a position which is closest to the ground when the smart bracelet is worn. It may be understood that, the pressure value due to the movable body detected by the pressure sensor in the position closest to the ground is the greatest.

In an implementation of the present disclosure, the larger the number of the pressure sensors disposed on the smart bracelet is, the more precise the pressure value detected in the lowest position on the smart bracelet is. It may be understood that, if the number of the pressure sensors is relatively small, no pressure sensors may be in the lowest position sometime, such that the detection in the lowest position may be inaccurate. Hence, if the number of the pressure sensors disposed on the smart bracelet is relatively large, at least one pressure sensor is in the lowest position in most cases, such that the detection is accurate, when the smart bracelet is moved freely.

Step S103 is determining a display section of the exterior surface of the smart bracelet according to the lowest position.

In an implementation of the present disclosure, the display section of the exterior surface may be a variable display section, that is to say, a current display section may be adjusted according to the orientation of the smart bracelet, such that the current display section is exactly consistent with the viewing habit of the user. The orientation of the smart bracelet may be determined according to the lowest position, such that the display section of the exterior surface of the smart bracelet may be determined according to the lowest position.

As seen from the above, according to the present disclosure, the plurality of pressure sensors is disposed on the interior surface of the smart bracelet, and the chamber of the smart bracelet receives the movable body, so as to receive the pressure values due to the movable body detected by the plurality of pressure sensors, determine the position of the pressure sensor corresponding to the greatest of the plurality of pressure values is the lowest position on the smart bracelet, and finally determine the display section of the exterior surface of the smart bracelet according to the lowest position. Hence, the display position on the smart bracelet can be intelligently adjusted according to the orientation of the smart bracelet, thereby facilitating the user's viewing and improving user experience.

Optionally, in some implementations of the present disclosure, determining the display section of the exterior surface of the smart bracelet according to the lowest position, includes:
setting an initial position on the smart bracelet, a first distance value, and a second distance value;
calculating a third distance value from the initial position to the lowest position in a preset direction;
calculating a first display position value according to the first distance value and the third distance value, and calculating a second display position value according to the second distance value and the third distance value;
determining a first display position to which a distance from the initial position in the preset direction is the first display position value, and determining a second display position to which a distance from the initial position in the preset direction is the second display position value; and
determining a section between the first display position and the second display position is the display section.

In an implementation of the present disclosure, the display section of the exterior surface is the section between the first display position and the second display position.

Optionally, the display section may be a part of the entire circumference of the smart bracelet, preferably, 1/3 of the entire circumference of the smart bracelet.

If the first display position is closer to the lowest position than the second display position, the first distance value means a value of a shorter one of preset absolute distances between the first display position and the lowest position along the smart bracelet. The second distance value means a value of a preset absolute distance from the second display position to the lowest position via the first display position along the smart bracelet. The third distance value means a value of an absolute distance from the initial position to the lowest position in the preset direction along the smart bracelet. If, for example, the smart bracelet is circular, the first distance value, the second distance value, and the third distance value mean arc lengths between sets of two points, rather than linear distances between two points.

In an implementation of the present disclosure, the preset direction may be a clockwise direction along the smart bracelet, or may be an anticlockwise direction along the smart bracelet.

It may be understood that, by means of detecting the lowest position on the smart bracelet, then presetting a relationship between the first display position, the second display position and the lowest position and calculating the first display position and the second display position, the display section of the smart bracelet can be determined according to the lowest position on the smart bracelet, such that the display section of the smart bracelet can be intelligently adjusted according to orientation variation of the smart bracelet.

Optionally, in some implementations of the present disclosure, the preset direction is the anticlockwise direction along the smart bracelet, and calculating the first display position value according to the first distance value and the third distance value, includes:
subtracting the first distance value from the third distance value, then adding a circumference value of the smart bracelet, and dividing by the circumference value of the smart bracelet to obtain a remainder as the first display position value.

Meanwhile, calculating the second display position value according to the second distance value and the third distance value, includes:
subtracting the second distance value from the third distance value, then adding a circumference value of the smart bracelet, and dividing by the circumference value of the smart bracelet to obtain a remainder as the second display position value.

Details are illustrated in Fig. 1c. Fig. 1c is a schematic view of coordinates on the smart bracelet according to an implementation of the present disclosure. In an implementation of the present disclosure, it is assumed that the coordinate E of the initial position on the smart bracelet is an origin O, and the circumference value of the smart bracelet is L. If, in the anticlockwise direction along the smart bracelet, the first distance value is 1, the second distance value is k, and the third distance value is s (i.e., the coordinate value of a position D detected by the pressure sensor), then the coordinate value of the first display position B is Xb=(s+L-1)%L, and the coordinate value of the second display position C is Xc=(s+L-k)%L. In this way, an area between the first display position B and the second display position C on the smart bracelet is the current display position. It may be understood that, if the smart bracelet is worn on the arm of the user at this time, the current display position on the smart bracelet is exactly consistent with the viewing habit of human eyes.

Optionally, in some implementations of the present disclosure, the preset direction is a clockwise direction along the smart bracelet, and calculating the first display position value according to the first distance value and the third distance value, includes:
adding the third distance value and the first distance value, then adding a circumference value of the smart bracelet, and dividing by the circumference value of the smart bracelet to obtain a remainder as the first display position value.

Optionally, in some implementations of the present disclosure, the preset direction is a clockwise direction along the smart bracelet, and calculating the second display position value according to the second distance value and the third distance value, includes:
adding the third distance value and the second distance value, then adding a circumference value of the smart bracelet, and dividing by the circumference value of the smart bracelet to obtain a remainder as the second display position value.

Details are illustrated in Fig. 1c. In an implementation of the present disclosure, it is assumed that the coordinate E of the initial position on the smart bracelet is an origin O, and the circumference value of the smart bracelet is L. If, in the anticlockwise direction along the smart bracelet, the first distance value is 1, the second distance value is k, and the third distance value is s (i.e., the coordinate value of a position D detected by the pressure sensor), then the coordinate value of the first display position B is Xb=(s+L+1)%L, and the coordinate value of the second display position C is Xc=(s+L+k)%L. In this way, an area between the first display position B and the second display position C on the smart bracelet is the current display position. It may be understood that, if the smart bracelet is worn on the arm of the user at this time, the current display position on the smart bracelet is exactly consistent with the viewing habit of human eyes.

It may be understood that, in an implementation of the present disclosure, when the first display position and the second display position of the smart bracelet is calculated, the coordinate of each position is set on the basis of the origin of coordinates, and hence, when the directions from the origin of coordinates are different, the set coordinates are different. Therefore, the coordinate values are calculated along the clockwise direction and the anticlockwise direction, respectively.

Optionally, in some implementations of the present disclosure, determining the display section of the exterior surface of the smart bracelet according to the lowest position, includes:
setting an initial position of the smart bracelet, a first distance value, and a fourth distance value;
calculating a third distance value from the initial position to the lowest position in a preset direction;
calculating a first display position value according to the first distance value and the third distance value;
determining a first display position to which a distance from the initial position in the preset direction is the first display position value;
determining a second display position to which a distance from the first display position in a direction opposite to the preset direction is the fourth distance value; and
determining a section between the first display position and the second display position is the display section.

The meanings of the first distance value and the third distance value are the same as mentioned hereinbefore. The fourth distance value means a value of a short one of absolute distances between the first display position and the second display position.

In an implementation of the present disclosure, the preset direction may be a clockwise direction along the smart bracelet, or may be an anticlockwise direction along the smart bracelet.

It may be understood that, by means of detecting the lowest position on the smart bracelet, then presetting a relationship between the first display position, the second display position and the lowest position and calculating the first display position and the second display position, the display section of the smart bracelet can be determined according to the lowest position on the smart bracelet, such that the display section of the smart bracelet can be intelligently adjusted according to orientation variation of the smart bracelet.

Optionally, in some implementations of the present disclosure, the preset direction is the anticlockwise direction along the smart bracelet, and calculating the first display position value according to the first distance value and the third distance value, includes:
subtracting the first distance value from the third distance value, then adding a circumference value of the smart bracelet, and dividing by the circumference value of the smart bracelet to obtain a remainder as the first display position value.

Details are illustrated in Fig. 1c. In an implementation of the present disclosure, it is assumed that the coordinate E of the initial position on the smart bracelet is an origin O, and the circumference value of the smart bracelet is L. If, in the anticlockwise direction along the smart bracelet, the first distance value is 1, the fourth distance value is p, and the third distance value is s (i.e., the coordinate value of a position D detected by the pressure sensor), then the coordinate value of the first display position B is Xb=(s+L-1)%L, and the coordinate value of the second display position C is Xc=(p-Xb+L)%L. In this way, an area between the first display position B and the second display position C on the smart bracelet is the current display position. It may be understood that, if the smart bracelet is worn on the arm of the user at this time, the current display position on the smart bracelet is exactly consistent with the viewing habit of human eyes.

Optionally, in some implementations of the present disclosure, the preset direction is the clockwise direction along the smart bracelet, and calculating the first display position value according to the first distance value and the third distance value, includes:
adding the third distance value and the first distance value, then adding a circumference value of the smart bracelet, and dividing by the circumference value of the smart bracelet to obtain a remainder as the first display position value.

Details are illustrated in Fig. 1c. In an implementation of the present disclosure, it is assumed that the coordinate E of the initial position on the smart bracelet is an origin O, and the circumference value of the smart bracelet is L. If, in the anticlockwise direction along the smart bracelet, the first distance value is 1, the fourth distance value is p, and the third distance value is s (i.e., the coordinate value of a position D detected by the pressure sensor), then the coordinate value of the first display position B is Xb=(s+L+1)%L, and the coordinate value of the second display position C is Xc=(p-Xb+L)%L. In this way, an area between the first display position B and the second display position C on the smart bracelet is the current display position. It may be understood that, if the smart bracelet is worn on the arm of the user at this time, the current display position on the smart bracelet is exactly consistent with the viewing habit of human eyes.

It may be understood that, in an implementation of the present disclosure, when the first display position and the second display position of the smart bracelet is calculated, the coordinate of each position is set on the basis of the origin of coordinates, and hence, when the directions from the origin of the coordinates are different, the set coordinates are different. Therefore, the coordinate values are calculated along the clockwise direction and the anticlockwise direction, respectively.

Optionally, in some implementations of the present disclosure, determining the display section of the exterior surface of the smart bracelet according to the lowest position, includes:
determining the display section according to the lowest position and a preset display section correspondence relationship.

The preset display section correspondence relationship is a correspondence relationship between the lowest position and the display section.

The preset display section correspondence relationship is determined by the user according to the lowest position on the smart bracelet and an orientation of the smart bracelet most suitable for the user's viewing when the user wears the smart bracelet according to his usage habit.

In an implementation of the present disclosure, when the user uses the smart bracelet after the preset display section correspondence relationship is preset, the display section is determined according to the lowest position detected by the pressure sensor and the preset display section correspondence relationship.

It may be understood that, the correspondence relationship between the lowest position and the display section is determined in advance, such that the display section of the smart bracelet can be intelligently adjusted according to the orientation of the smart bracelet.

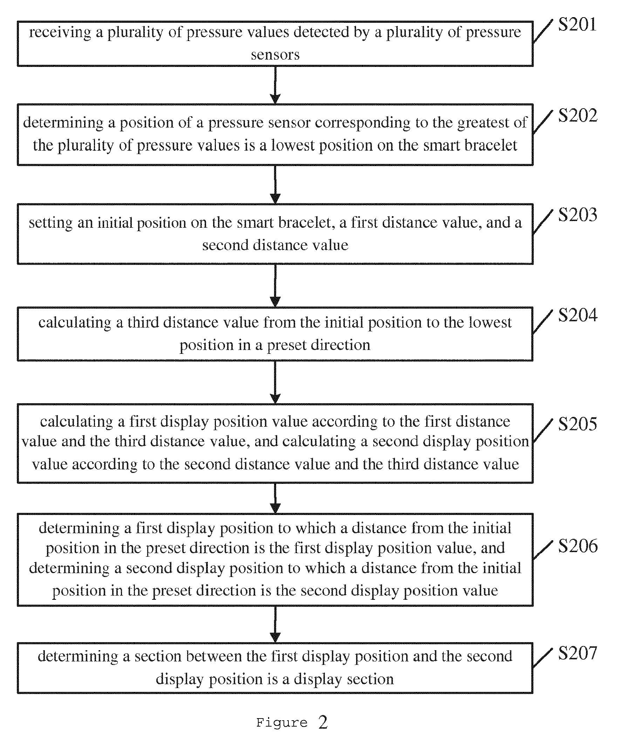

In order to fully understand and carry out the solutions of the above implementations of the present disclosure, implementations of the present disclosure is further described in conjunction with Fig. 2.

Fig. 2 is a schematic flowchart of a second implementation of a method for adjusting a display position according to the present disclosure. Elements in the method as illustrated in Fig. 2 which are the same as or similar to those as illustrated in Fig. 1 may be understood from the detailed description of Fig. 1, and are not described herein. As illustrated in Fig. 2, a method for adjusting a display position according to an implementation of the present disclosure may include the following steps:
Step S201 of receiving a plurality of pressure values detected by a plurality of pressure sensors;
Step S202 of determining a position of a pressure sensor corresponding to the greatest of the plurality of pressure values is a lowest position on the smart bracelet;
Step S203 of setting an initial position on the smart bracelet, a first distance value, and a second distance value;
Step S204 of calculating a third distance value from the initial position to the lowest position in a preset direction;
Step S205 of calculating a first display position value according to the first distance value and the third distance value, and calculating a second display position value according to the second distance value and the third distance value;
Step S206 of determining a first display position to which a distance from the initial position in the preset direction is the first display position value, and determining a second display position to which a distance from the initial position in the preset direction is the second display position value; and
Step S207 of determining a section between the first display position and the second display position is a display section.

As seen from the above, according to the present disclosure, the plurality of pressure sensors is disposed on the interior surface of the smart bracelet, and the chamber of the smart bracelet receives the movable body, so as to receive the pressure values due to the movable body detected by the plurality of pressure sensors, determine the position of the pressure sensor corresponding to the greatest of the plurality of pressure values is the lowest position on the smart bracelet, and finally determine the display section of the exterior surface of the smart bracelet according to the lowest position. Hence, the display position on the smart bracelet can be intelligently adjusted according to the orientation of the smart bracelet, thereby facilitating the user's viewing and improving user experience.

A smart bracelet is further provided by an implementation of the present disclosure, and includes:
a receiving unit configured to receive a plurality of pressure values detected by a plurality of pressure sensors; and
a determining unit configured to determine a position of a pressure sensor corresponding to the greatest of the plurality of pressure values is a lowest position on the smart bracelet.

The determining unit is further configured to determine a display section of the exterior surface of the smart bracelet according to the lowest position.

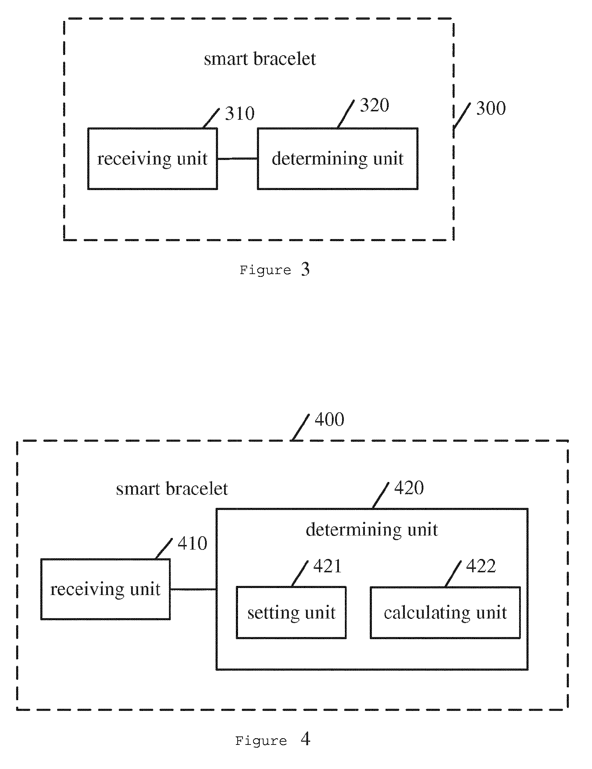

Details are illustrated in Fig. 3. Fig. 3 is a schematic structural view of a first implementation of a smart bracelet according to the present disclosure. The smart bracelet is configured to realize the method for adjusting a display position disclosed by the implementations of the present disclosure. As illustrated in Fig. 3, a smart bracelet 300 according to an implementation of the present disclosure may include a receiving unit 310 and a determining unit 320.

The receiving unit 310 is configured to receive a plurality of pressure values detected by a plurality of pressure sensors.

In an implementation of the present disclosure, the smart bracelet as illustrated in Fig. 1a receives the plurality of pressure values detected by the plurality of pressure sensors disposed on the interior surface of the smart bracelet.

The determining unit 320 is configured to determine a position of a pressure sensor corresponding to the greatest of the plurality of pressure values is a lowest position on the smart bracelet.

The lowest position means a position which is closest to the ground when the smart bracelet is worn. It may be understood that, the pressure value due to the movable body detected by the pressure sensor in the position closest to the ground is the greatest.

The determining unit 330 is further configured to determine a display section of the exterior surface of the smart bracelet according to the lowest position.

In an implementation of the present disclosure, the display section of the exterior surface may be a variable display section, that is to say, a current display section may be adjusted according to the orientation of the smart bracelet, such that the current display section is exactly consistent with the viewing habit of the user. The orientation of the smart bracelet may be determined according to the lowest position, such that the display section of the exterior surface of the smart bracelet may be determined according to the lowest position.

As seen from the above, according to the present disclosure, the plurality of pressure sensors is disposed on the interior surface of the smart bracelet 300, and the chamber of the smart bracelet 300 receives the movable body, so as to receive the pressure values due to the movable body detected by the plurality of pressure sensors, determine the position of the pressure sensor corresponding to the greatest of the plurality of pressure values is the lowest position on the smart bracelet 300, and finally determine the display section of the exterior surface of the smart bracelet 300 according to the lowest position. Hence, the display position on the smart bracelet can be intelligently adjusted according to the orientation of the smart bracelet, thereby facilitating the user's viewing and improving user experience.

In the present implementation, the smart bracelet 300 is presented in the form of units. The term "unit" herein may mean an application-specific integrated circuit (ASIC), a processor configured to execute one or more software programs or firmware programs as well as a memory, an integrated logic circuit, and/or other devices providing the aforementioned functions.

It may be understood that, functions of each functional unit of the smart bracelet 300 according to the present implementation may be specifically realized according to the methods in the aforementioned method implementations, and a specific realization process may be understood from the description relevant to the aforementioned method implementations, and are not described herein.

Fig. 4 is a schematic structural view of a second implementation of a smart bracelet according to the present disclosure. The smart bracelet is configured to realize the method for adjusting a display position disclosed by the implementations of the present disclosure. The smart bracelet as illustrated in Fig. 4 is obtained by optimizing the smart bracelet as illustrated in Fig. 3. The smart bracelet as illustrated in Fig. 4 may further have some specific structures in addition to the units of the smart bracelet as illustrated in Fig. 3.

Optionally, in some implementations of the present disclosure, the determining unit 420, includes:
a setting unit 421 configured to set an initial position on the smart bracelet, a first distance value, and a second distance value; and
a calculating unit 422 configured to calculate a third distance value from the initial position to the lowest position in a preset direction.

The calculating unit 422 is further configured to calculate a first display position value according to the first distance value and the third distance value, and calculate a second display position value according to the second distance value and the third distance value.

The determining unit 420 is further configured to determine a first display position to which a distance from the initial position in the preset direction is the first display position value, and determine a second display position to which a distance from the initial position in the preset direction is the second display position value.

The determining unit 420 is further configured to determine a section between the first display position and the second display position is the display section.

Optionally, in some implementations of the present disclosure, the preset direction is an anticlockwise direction along the smart bracelet, and the calculating unit 422 is specifically configured to subtract the first distance value from the third distance value, then add a circumference value of the smart bracelet, and divide by the circumference value of the smart bracelet to obtain a remainder as the first display position value.

Optionally, in some implementations of the present disclosure, the preset direction is an anticlockwise direction along the smart bracelet, and the calculating unit 422 is specifically configured to subtract the second distance value from the third distance value, then add a circumference value of the smart bracelet, and divide by the circumference value of the smart bracelet to obtain a remainder as the second display position value.

Optionally, in some implementations of the present disclosure, the preset direction is a clockwise direction along the smart bracelet, and the calculating unit 422 is specifically configured to add the third distance value and the first distance value, then add a circumference value of the smart bracelet, and divide by the circumference value of the smart bracelet to obtain a remainder as the first display position value.

Optionally, in some implementations of the present disclosure, the preset direction is a clockwise direction along the smart bracelet, and the calculating unit 422 is specifically configured to add the third distance value and the second distance value, then add a circumference value of the smart bracelet, and divide by the circumference value of the smart bracelet to obtain a remainder as the second display position value.

Optionally, in some implementations of the present disclosure, the setting unit 421 is further configured to set an initial position of the smart bracelet, a first distance value, and a fourth distance value.

The calculating unit 422 is further configured to calculate a third distance value from the initial position to the lowest position in a preset direction.

The calculating unit 422 is further configured to calculate a first display position value according to the first distance value and the third distance value.

The determining unit 420 is further configured to determine a first display position to which a distance from the initial position in the preset direction is the first display position value.

The determining unit 420 is further configured to determine a second display position to which a distance from the first display position in a direction opposite to the preset direction is the fourth distance value.

The determining unit 420 is further configured to determine a section between the first display position and the second display position is the display section.

Optionally, in some implementations of the present disclosure, the preset direction is an anticlockwise direction along the smart bracelet, and the calculating unit 422 is specifically configured to subtract the first distance value from the third distance value, then add a circumference value of the smart bracelet, and divide by the circumference value of the smart bracelet to obtain a remainder as the first display position value.

Optionally, in some implementations of the present disclosure, the preset direction is an anticlockwise direction along the smart bracelet, and the calculating unit 422 is specifically configured to subtract the second distance value from the third distance value, then add a circumference value of the smart bracelet, and divide by the circumference value of the smart bracelet to obtain a remainder as the second display position value.

Optionally, in some implementations of the present disclosure, the preset direction is a clockwise direction along the smart bracelet, and the calculating unit 422 is specifically configured to add the third distance value and the first distance value, then add a circumference value of the smart bracelet, and divide by the circumference value of the smart bracelet to obtain a remainder as the first display position value.

Optionally, in some implementations of the present disclosure, the preset direction is a clockwise direction along the smart bracelet, and the calculating unit 422 is further configured to add the third distance value and the second distance value, then add a circumference value of the smart bracelet, and divide by the circumference value of the smart bracelet to obtain a remainder as the second display position value.

Optionally, in some implementations of the present disclosure, the setting unit 421 is further configured to set an initial position of the smart bracelet, a first distance value, and a fourth distance value.

The calculating unit 422 is further configured to calculate a third distance value from the initial position to the lowest position in a preset direction.

The calculating unit 422 is further configured to calculate a first display position value according to the first distance value and the third distance value.

The determining unit 420 is further configured to determine a first display position to which a distance from the initial position in the preset direction is the first display position value.

The determining unit 420 is further configured to determine a second display position to which a distance from the first display position in a direction opposite to the preset direction is the fourth distance value.

The determining unit 420 is further configured to determine a section between the first display position and the second display position is the display section.

Optionally, in some implementations of the present disclosure, the preset direction is an anticlockwise direction along the smart bracelet, and the calculating unit 422 is specifically configured to subtract the first distance value from the third distance value, then add a circumference value of the smart bracelet, and divide by the circumference value of the smart bracelet to obtain a remainder as the first display position value.

Optionally, in some implementations of the present disclosure, the preset direction is a clockwise direction along the smart bracelet, and the calculating unit 422 is specifically configured to add the third distance value and the first distance value, then add a circumference value of the smart bracelet, and divide by the circumference value of the smart bracelet to obtain a remainder as the first display position value.

Optionally, in some implementations of the present disclosure, the determining unit 420 is specifically configured to determine the display section according to the lowest position and a preset display section correspondence relationship. The preset display section correspondence relationship is a correspondence relationship between the lowest position and the display section.

As seen from the above, according to the present disclosure, the plurality of pressure sensors is disposed on the interior surface of the smart bracelet 400, and the chamber of the smart bracelet 400 receives the movable body, so as to receive the pressure values due to the movable body detected by the plurality of pressure sensors, determine the position of the pressure sensor corresponding to the greatest of the plurality of pressure values is the lowest position on the smart bracelet 400, and finally determine the display section of the exterior surface of the smart bracelet 400 according to the lowest position. Hence, the display position on the smart bracelet can be intelligently adjusted according to the orientation of the smart bracelet, thereby facilitating the user's viewing and improving user experience.

In the present implementation, the smart bracelet 400 is presented in the form of units. The term "unit" herein may mean an application-specific integrated circuit (ASIC), a processor configured to execute one or more software programs or firmware programs as well as a memory, an integrated logic circuit, and/or other devices providing the aforementioned functions.

It may be understood that, functions of each functional unit of the smart bracelet 400 according to the present implementation may be specifically realized according to the methods in the aforementioned method implementations, and a specific realization process may be understood from the description relevant to the aforementioned method implementations, and are not described herein.

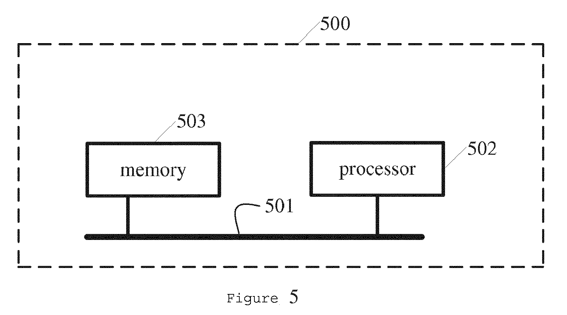

Fig. 5 is a schematic structural view of a third implementation of a smart bracelet according to the present disclosure. The smart bracelet is configured to realize the method for adjusting a display position disclosed by the implementations of the present disclosure. The smart bracelet 500 may include at least one bus 501, at least one processor 502 electrically connected to the bus 501, and at least one memory 503 electrically connected to the bus 501.

The processor 502, via the bus 501, invokes program codes stored in the memory to:
receive a plurality of pressure values detected by a plurality of pressure sensors;
determine a position of a pressure sensor corresponding to the greatest of the plurality of pressure values is a lowest position on the smart bracelet; and
determine a display section of the exterior surface of the smart bracelet according to the lowest position.

Optionally, in some implementations of the present disclosure, the processor 502 invoking the program codes stored in the memory to determine the display section of the exterior surface of the smart bracelet according to the lowest position, includes:
the processor 502 invoking the program codes stored in the memory to:
set an initial position on the smart bracelet, a first distance value, and a second distance value;
calculate a third distance value from the initial position to the lowest position in a preset direction;
calculate a first display position value according to the first distance value and the third distance value, and calculate a second display position value according to the second distance value and the third distance value;
determine a first display position to which a distance from the initial position in the preset direction is the first display position value, and determine a second display position to which a distance from the initial position in the preset direction is the second display position value; and
determine a section between the first display position and the second display position is the display section.

Optionally, in some implementations of the present disclosure, the preset direction is an anticlockwise direction along the smart bracelet, and the processor 502 invoking the program codes stored in the memory to calculate the first display position value according to the first distance value and the third distance value, includes:
the processor 502 invoking the program codes stored in the memory to:
subtract the first distance value from the third distance value, then add a circumference value of the smart bracelet, and divide by the circumference value of the smart bracelet to obtain a remainder as the first display position value.

Optionally, in some implementations of the present disclosure, the preset direction is an anticlockwise direction along the smart bracelet, and the processor 502 invoking the program codes stored in the memory to calculate the second display position value according to the second distance value and the third distance value, includes:
the processor 502 invoking the program codes stored in the memory to:
subtract the second distance value from the third distance value, then add a circumference value of the smart bracelet, and divide by the circumference value of the smart bracelet to obtain a remainder as the second display position value.

Optionally, in some implementations of the present disclosure, the preset direction is a clockwise direction along the smart bracelet, and the processor 502 invoking the program codes stored in the memory to calculate the first display position value according to the first distance value and the third distance value, includes:
the processor 502 invoking the program codes stored in the memory to:
add the third distance value and the first distance value, then add a circumference value of the smart bracelet, and divide by the circumference value of the smart bracelet to obtain a remainder as the first display position value.

Optionally, in some implementations of the present disclosure, the preset direction is a clockwise direction along the smart bracelet, and the processor 502 invoking the program codes stored in the memory to calculate the second display position value according to the second distance value and the third distance value, includes:
the processor 502 invoking the program codes stored in the memory to:
add the third distance value and the second distance value, then add a circumference value of the smart bracelet, and divide by the circumference value of the smart bracelet to obtain a remainder as the second display position value.

Optionally, in some implementations of the present disclosure, the processor 502 invoking the program codes stored in the memory to determine the display section of the exterior surface of the smart bracelet according to the lowest position, includes:
the processor 502 invoking the program codes stored in the memory to:
set an initial position of the smart bracelet, a first distance value, and a fourth distance value;
calculate a third distance value from the initial position to the lowest position in a preset direction;
calculate a first display position value according to the first distance value and the third distance value;
determine a first display position to which a distance from the initial position in the preset direction is the first display position value;
determine a second display position to which a distance from the first display position in a direction opposite to the preset direction is the fourth distance value; and
determine a section between the first display position and the second display position is the display section.

Optionally, in some implementations of the present disclosure, the preset direction is an anticlockwise direction along the smart bracelet, and the processor 502 invoking the program codes stored in the memory to calculate the first display position value according to the first distance value and the third distance value, includes:
the processor 502 invoking the program codes stored in the memory to:
subtract the first distance value from the third distance value, then add a circumference value of the smart bracelet, and divide by the circumference value of the smart bracelet to obtain a remainder as the first display position value.

Optionally, in some implementations of the present disclosure, the preset direction is a clockwise direction along the smart bracelet, and the processor 502 invoking the program codes stored in the memory to calculate the first display position value according to the first distance value and the third distance value, includes:
the processor 502 invoking the program codes stored in the memory to:
add the third distance value and the first distance value, then add a circumference value of the smart bracelet, and divide by the circumference value of the smart bracelet to obtain a remainder as the first display position value.

Optionally, in some implementations of the present disclosure, the processor 502 invoking the program codes stored in the memory to determine the display section of the exterior surface of the smart bracelet according to the lowest position, includes:
the processor 502 invoking the program codes stored in the memory to:
determine the display section according to the lowest position and a preset display section correspondence relationship.

The preset display section correspondence relationship is a correspondence relationship between the lowest position and the display section.

As seen from the above, according to the present disclosure, the plurality of pressure sensors is disposed on the interior surface of the smart bracelet 500, and the chamber of the smart bracelet 500 receives the movable body, so as to receive the pressure values due to the movable body detected by the plurality of pressure sensors, determine the position of the pressure sensor corresponding to the greatest of the plurality of pressure values is the lowest position on the smart bracelet 500, and finally determine the display section of the exterior surface of the smart bracelet 500 according to the lowest position. Hence, the display position on the smart bracelet can be intelligently adjusted according to the orientation of the smart bracelet, thereby facilitating the user's viewing and improving user experience.

In the present implementation, the smart bracelet 500 is presented in the form of units. The term "unit" herein may mean an application-specific integrated circuit (ASIC), a processor configured to execute one or more software programs or firmware programs as well as a memory, an integrated logic circuit, and/or other devices providing the aforementioned functions.

It may be understood that, functions of each functional unit of the smart bracelet 500 according to the present implementation may be specifically realized according to the methods in the aforementioned method implementations, and a specific realization process may be understood from the description relevant to the aforementioned method implementations, and are not described herein.

As stated above, the aforementioned implementations are merely used to describe technical solutions of the present disclosure, rather than limit it. Although the present disclosure is described in detail with reference to the aforementioned implementations, it should be understood by persons skilled in the art that, amendments may still be made to the technical solutions described in the aforementioned implementations, or equivalent substitutions may be made to a part of technical features therein. These amendments or substitutions do not make the spirit of the corresponding technical solutions depart from the scope of the technical solutions of the implementations of the present disclosure.

## Claims

1. A method for adjusting a display position, applicable to a smart bracelet, the smart bracelet having an interior surface on which a plurality of pressure sensors is disposed, the smart bracelet having a chamber receiving a movable body, the movable body moving along the interior surface of the smart bracelet, the smart bracelet having an exterior surface which includes a display area, wherein the method comprises:
receiving a plurality of pressure values detected by the plurality of pressure sensors;
determining a position of a pressure sensor corresponding to the greatest of the plurality of pressure values is a lowest position on the smart bracelet; and
determining a display section of the exterior surface of the smart bracelet according to the lowest position.

2. The method of claim 1, wherein, determining the display section of the exterior surface of the smart bracelet according to the lowest position, comprises:
setting an initial position on the smart bracelet, a first distance value, and a second distance value;
calculating a third distance value from the initial position to the lowest position in a preset direction;
calculating a first display position value according to the first distance value and the third distance value, and calculating a second display position value according to the second distance value and the third distance value;
determining a first display position to which a distance from the initial position in the preset direction is the first display position value, and determining a second display position to which a distance from the initial position in the preset direction is the second display position value; and
determining a section between the first display position and the second display position is the display section.

3. The method of claim 2, wherein the preset direction is an anticlockwise direction along the smart bracelet, and calculating the first display position value according to the first distance value and the third distance value, comprises:
subtracting the first distance value from the third distance value, then adding a circumference value of the smart bracelet, and dividing by the circumference value of the smart bracelet to obtain a remainder as the first display position value.

4. The method of claim 2, wherein the preset direction is an anticlockwise direction along the smart bracelet, and calculating the second display position value according to the second distance value and the third distance value, comprises:
subtracting the second distance value from the third distance value, then adding a circumference value of the smart bracelet, and dividing by the circumference value of the smart bracelet to obtain a remainder as the second display position value.

5. The method of claim 2, wherein the preset direction is a clockwise direction along the smart bracelet, and calculating the first display position value according to the first distance value and the third distance value, comprises:
adding the third distance value and the first distance value, then adding a circumference value of the smart bracelet, and dividing by the circumference value of the smart bracelet to obtain a remainder as the first display position value.

6. The method of claim 2, wherein the preset direction is a clockwise direction along the smart bracelet, and calculating the second display position value according to the second distance value and the third distance value, comprises:
adding the third distance value and the second distance value, then adding a circumference value of the smart bracelet, and dividing by the circumference value of the smart bracelet to obtain a remainder as the second display position value.

7. The method of claim 1, wherein determining the display section of the exterior surface of the smart bracelet according to the lowest position, comprises:
setting an initial position of the smart bracelet, a first distance value, and a fourth distance value;
calculating a third distance value from the initial position to the lowest position in a preset direction;
calculating a first display position value according to the first distance value and the third distance value;
determining a first display position to which a distance from the initial position in the preset direction is the first display position value;
determining a second display position to which a distance from the first display position in a direction opposite to the preset direction is the fourth distance value; and
determining a section between the first display position and the second display position is the display section.

8. The method of claim 7, wherein the preset direction is an anticlockwise direction along the smart bracelet, and calculating the first display position value according to the first distance value and the third distance value, comprises:
subtracting the first distance value from the third distance value, then adding a circumference value of the smart bracelet, and dividing by the circumference value of the smart bracelet to obtain a remainder as the first display position value.

9. The method of claim 7, wherein the preset direction is a clockwise direction along the smart bracelet, and calculating the first display position value according to the first distance value and the third distance value, comprises:
adding the third distance value and the first distance value, then adding a circumference value of the smart bracelet, and dividing by the circumference value of the smart bracelet to obtain a remainder as the first display position value.

10. The method of claim 1, wherein determining the display section of the exterior surface of the smart bracelet according to the lowest position, comprises:
determining the display section according to the lowest position and a preset display section correspondence relationship, wherein the preset display section correspondence relationship is a correspondence relationship between the lowest position and the display section.

11. A smart bracelet, the smart bracelet having an interior surface on which a plurality of pressure sensors is disposed, the smart bracelet having a chamber receiving a movable body, the movable body moving along the interior surface of the smart bracelet, the smart bracelet having an exterior surface which includes a display area, wherein the smart bracelet comprises:
a receiving unit configured to receive a plurality of pressure values detected by the plurality of pressure sensors; and
a determining unit configured to determine a position of a pressure sensor corresponding to the greatest of the plurality of pressure values is a lowest position on the smart bracelet,
wherein the determining unit is further configured to determine a display section of the exterior surface of the smart bracelet according to the lowest position.

12. The smart bracelet of claim 11, wherein the determining unit comprises:
a setting unit configured to set an initial position on the smart bracelet, a first distance value, and a second distance value; and
a calculating unit configured to calculate a third distance value from the initial position to the lowest position in a preset direction,
wherein the calculating unit is further configured to calculate a first display position value according to the first distance value and the third distance value, and calculate a second display position value according to the second distance value and the third distance value;
the determining unit is further configured to determine a first display position to which a distance from the initial position in the preset direction is the first display position value, and determine a second display position to which a distance from the initial position in the preset direction is the second display position value; and
the determining unit is further configured to determine a section between the first display position and the second display position is the display section.

13. The smart bracelet of claim 12, wherein the preset direction is an anticlockwise direction along the smart bracelet, and the calculating unit is configured to subtract the first distance value from the third distance value, then add a circumference value of the smart bracelet, and divide by the circumference value of the smart bracelet to obtain a remainder as the first display position value.

14. The smart bracelet of claim 12, wherein the preset direction is an anticlockwise direction along the smart bracelet, and the calculating unit is configured to subtract the second distance value from the third distance value, then add a circumference value of the smart bracelet, and divide by the circumference value of the smart bracelet to obtain a remainder as the second display position value.

15. the smart bracelet of claim 12, wherein the preset direction is a clockwise direction along the smart bracelet, and the calculating unit is configured to add the third distance value and the first distance value, then add a circumference value of the smart bracelet, and divide by the circumference value of the smart bracelet to obtain a remainder as the first display position value.

16. The smart bracelet of claim 12, wherein the preset direction is a clockwise direction along the smart bracelet, and the calculating unit is configured to add the third distance value and the second distance value, then add a circumference value of the smart bracelet, and divide by the circumference value of the smart bracelet to obtain a remainder as the second display position value.

17. The smart bracelet of claim 11, wherein the setting unit is further configured to set an initial position of the smart bracelet, a first distance value, and a fourth distance value;
the calculating unit is further configured to calculate a third distance value from the initial position to the lowest position in a preset direction;
the calculating unit is further configured to calculate a first display position value according to the first distance value and the third distance value;
the determining unit is further configured to determine a first display position to which a distance from the initial position in the preset direction is the first display position value;
the determining unit is further configured to determine a second display position to which a distance from the first display position in a direction opposite to the preset direction is the fourth distance value; and
the determining unit is further configured to determine a section between the first display position and the second display position is the display section.

18. The smart bracelet of claim 17, wherein the preset direction is an anticlockwise direction along the smart bracelet, and the calculating unit is configured to subtract the first distance value from the third distance value, then add a circumference value of the smart bracelet, and divide by the circumference value of the smart bracelet to obtain a remainder as the first display position value.

19. The smart bracelet of claim 17, wherein the calculating unit is configured to add the third distance value and the first distance value, then add a circumference value of the smart bracelet, and divide by the circumference value of the smart bracelet to obtain a remainder as the first display position value.

20. The smart bracelet of claim 11, wherein the determining unit is specifically configured to determine the display section according to the lowest position and a preset display section correspondence relationship, wherein the preset display section correspondence relationship is a correspondence relationship between the lowest position and the display section.
